# NEUE EUROPÄISCHE PATENTSCHRIFT

(11) **EP 1 341 687 B2**
(45) Veröffentlichungstag und Bekanntmachung des Hinweises auf die Entscheidung über den Einspruch: **14.09.2011**
(45) Hinweis auf die Patenterteilung: 16.02.2005
(21) Anmeldenummer: 01270442.5
(22) Anmeldetag: 12.12.2001
(51) Int. Cl.: B60T 10/02, B60T 1/087

(54) **VERFAHREN ZUR ANFORDERUNG BREMSLEISTUNGSUNTERSTÜTZENDER SYSTEME**
METHOD FOR CALLING BRAKE POWER SUPPORT SYSTEMS
PROCEDE DE SOLLICITATION DE SYSTEMES D'ASSISTANCE AU FREINAGE

(30) Priorität: 13.12.2000 DE 10062222
(43) Veröffentlichungstag der Anmeldung: 10.09.2003
(73) Patentinhaber: ZF FRIEDRICHSHAFEN Aktiengesellschaft, 88038 Friedrichshafen (DE)
(72) Erfinder: REISCH, Bernhard, 88316 Isny (DE); SCHMIDTNER, Peter, 88131 Lindau (DE)
(86) Internationale Anmeldenummer: PCT/EP2001/014910
(87) Internationale Veröffentlichungsnummer: WO 2002/047948

(56) Entgegenhaltungen:
- EP-A2- 1 013 521
- WO-A-00/24622
- DE-A- 4 408 350
- DE-A1- 19 716 919
- DE-C1- 19 848 544
- Voith Turbo, Turbogetriebe T 312 br Betriebsanleitung

## Beschreibung

Die vorliegende Erfindung betrifft ein Verfahren zur Anforderung bremsleistungsunterstützender Systeme, wie z.B. aus WO-A-00 24622 bekannt, für ein Fahrzeug gemäß dem Oberbegriff des Patentanspruchs 1.

Es ist heutzutage üblich, insbesondere für NKW's bremsleistungsunterstützende Systeme einzusetzen.

Nach dem Stand der Technik werden insbesondere bei Nutzfahrzeugen Dauerbremsanlagen (verschleissfreie Bremssysteme) zum Entlasten der Betriebsbremsanlage eingesetzt. Dauerbremsanlagen können außerdem die Wirtschaftlichkeit der Nutzfahrzeuge durch höhere Durchschnittsgeschwindigkeiten (insbesondere bei längeren Bergabfahrten) sowie durch eine deutliche Reduzierung des Verschleißes der Bremsbeläge der Betriebsbremse erhöhen.

Als Dauerbremsen werden Motorbremssysteme eingesetzt, welche im Schubbetrieb ein vom eingelegten Gang abhängiges Bremsmoment liefern. Motorbremssysteme weisen jedoch den Nachteil auf, dass ihr Einsatz den Komfort für den Fahrer beeinträchtigt.

Des weiteren sind zum Umwandeln von kinetischer Energie in Wärmeenergie Retarderbremsen bekannt, die sich durch die Art der Energieumwandlung unterscheiden, wobei bei hydrodynamischen Retardern die Energieumwandlung durch Flüssigkeitsreibung und bei elektrodynamischen Retardern mittels eines Magnetfelds erfolgt. Retarder dienen als nahezu verschleissfreie Dauerbremsen, insbesondere für Nutzfahrzeuge und Bahnantriebe, da sie den Vorzug aufweisen, die abzubremsende Energie ohne Verschleiss über längere Zeiträume in Wärme umzuwandeln.

Je nach Anordnung im Triebstrang werden Retarder in Primärretarder und Sekundärretarder eingeteilt, wobei Primärretarder motorseitig und Sekundärretarder getriebeabtriebsseitig angeordnet sind. Dies bedeutet, dass Primärretarder in Abhängigkeit von der Motordrehzahl arbeiten, während Sekundärretarder in Abhängigkeit von der Fahrzeuggeschwindigkeit arbeiten.

Weitere bremsleistungsunterstützende Systeme sind die Betriebsbremse des Zugfahrzeugs und/oder des Anhängers, elektrisch schaltbare Lüfter, Thermostate und Wasserpumpen.

Diese werden jedoch nach dem Stand der Technik zugeschaltet, wenn die Temperatur des verwendeten Kühlmittels einen bestimmten Wert überschreitet, mit der Folge, dass es zu einer Bremsleistungsbegrenzung oder Bremsleistungsreduzierung zum Schutz des Motorkühlsystems kommen kann.

Der vorliegenden Erfindung liegt daher die Aufgabe zugrunde, ein Verfahren anzugeben, welches es ermöglicht, mit optimalem Komfort die erforderliche Gesamtbremsleistung zu erzielen.

Diese Aufgabe wird durch die Merkmale des Patentanspruchs 1 gelöst. Weitere Ausgestaltungen gehen aus den Unteransprüchen hervor.

Demnach wird vorgeschlagen, bei Beginn einer Retarderbremsung, präventiv einen elektrisch geschalteten Thermostaten bzw. eine elektrische Wasserpumpe zur optimalen Nutzung des Fahrzeugkühlsystems zuzuschalten.

Zudem wird vorgeschlagen, entsprechend den aktuellen Bedingungen weitere vorhandene Systeme zur Unterstützung zuzuschalten.

Erfindungsgemäß wird die Motorbremse aus Komfortgründen nur dann zugeschaltet, wenn dies zur Unterstützung der Retarderbremsleistung erforderlich ist.

Die Bestimmung, ob und wann eine Motorbremszuschaltung zur Steigerung der aktuellen Leistungsfähigkeit der Gesamtbremswirkung notwendig ist, werden erfindungsgemäß mehrere, sich gegenseitig beeinflussende Kenngrößen berücksichtigt.

Ein wichtiges Kriterium stellt hierbei die aktuelle Bremswirkung des Retarders dar, die aus dem aktuellen Bremsmoment, der aktuellen Bremsleistung, dem Retarder-Einlaß- oder Auslaßdruck oder dem Steuerstrom ermittelbar ist.

Zudem wird als weiteres Kriterium der aktuelle Fahrzustand aus den aktuellen Drehzahlen (z.B. Getriebeabtriebsdrehzahl, Raddrehzahlen, Motordrehzahlen, Kupplungsdrehzahl), der Fahrzeuggeschwindigkeit, den Drehzahl- oder Geschwindigkeitsänderungen, der Topographie, oder der Fahrzeugmasse in Verbindung mit Kenntnis der Topographie ermittelt.

Erfindungsgemäß wird zur Bestimmung der Notwendigkeit einer Motorbremszuschaltung auch die Leistungsfähigkeit des Fahrzeugkühlsystems berücksichtigt, die sich beispielsweise aus der Temperatur im Kühlsystem, deren Änderung als Funktion der Zeit, der Motordrehzahl, dem Druck im Kühlkreislauf, der Gangstellung, dem Kupplungszustand oder der Wasserpumpendrehzahl ergibt.

Des weiteren wird auch die Leistungsfähigkeit der Motorbremse als Kenngröße verwendet.

Gemäß der Erfindung werden die oben genannten unterschiedlichen Kenngrößen durch eine logische Verknüpfung oder im Rahmen einer weiteren Variante unter Zuhilfenahme eines Fuzzy Regelwerkes berücksichtigt, um die Notwendigkeit einer Motorbremszuschaltung zu erkennen und diese auszulösen.

Ein wesentlicher Vorteil der Verwendung eines Fuzzy Regelwerkes besteht darin, dass die unterschiedlichen Größen entsprechend gewichtet in das Ergebnis eingehen.

Die Anforderung einer Motorbremszuschaltung wird dem Fahrer akustisch, optisch oder haptisch mitgeteilt und/oder an die Motorbremse weitergeleitet.

## Patentansprüche

1. Verfahren zur Anforderung bremsleistungsunterstützender System für ein Fahrzeug, bei dem bei Beginn einer Retarderbremsung ein elektrisch geschalteter Thermostat bzw. eine elektrische Wasserpumpe zur optimalen Nutzung des Fahrzeugkühlsystems präventiv zugeschaltet werden, **dadurch gekennzeichnet, dass** eine Motorbremsanforderung erfolgt, wenn dies aufgrund der aktuellen Retarderbremsleistung erforderlich wird und zur Bestimmung der Notwendigkeit einer Motorbremsanforderung die aktuelle Bremswirkung des Retarders, der aktuelle Fahrzustand und die Leistungsfähig-keit des Fahrzeugkühlsystems berücksichtigt werden.

2. Verfahren nach Anspruch 1, **dadurch gekennzeichnet, dass** die aktuelle Bremswirkung aus dem aktuellen Bremsmoment, der aktuellen Bremsleistung, dem Retarder Einiaß- oder Auslaßdruck oder dem Steuerstrom ermittelt wird, dass der aktuelle Fahrzustand aus den aktuellen Drehzah-len (z. B. Getriebeabtriebsdrehzahl, Raddrehzahlen, Motordrehzahlen, kupplungsdrehzahl), der Fahrzeuggeschwindigkeit, den Drehzahl- oder Geschwindigkeitsänderungen, der Topographie, oder der Fahrzeugmasse in verbindung mit der Topographie ermittelt wird und dass die Leistungsfähigkeit des Fahrzeugkühlsystems aus der Temperatur im Kühlsystem, der Änderung der Tem-peratur als Funktion der Zeit, der Motordrehzahl, dem Druckes im Kühlkreislauf, der Gangstellung, dem Kupplungszustand oder der Wasserpumpendrehzahl ermittelt wird.

3. Verfahren nach Anspruch 2, **dadurch gekennzeichnet, dass** die aktuelle Bremswirkung des Retarders, der aktuelle Fahrzustand und die Leistungsfähigkeit des Fahrzeugkühisystems durch eine logische Verknüpfung oder mittels eines Fuzzy-Regelwerkes berücksichtigt werden, um die Notwendigkeit einer Motorbremsanforderung zu erkennen und diese auszulösen.

4. Verfahren nach einem der Ansprüche 1 bis 3, **dadurch gekennzeichnet, dass** die Motorbremsanforderung dem Fahrer akustisch, op-tisch oder haptisch mitgeteilt wird.

## Claims

1. Method for requesting the brake-power-supporting systems in a vehicle, in which method, at the start of a retarder braking operation, an electrically operated thermostat and/or an electric water pump are/is preventively activated for optimal utilization of the vehicle's cooling system, **characterized in that** an engine-brake request is issued when this is necessary on account of the present braking performance of the retarder and, for determining the necessity of an engine-brake request, the present braking action of the retarder, the present driving condition and the efficiency of the vehicle's cooling system are considered.

2. Method according to claim 1, **characterized in that** the present braking action is determined on the basis of the present braking torque, the present braking performance, the inlet or outlet pressure of the retarder, or the control current; **in that** the present driving condition is determined on the basis of the present speeds (e.g. transmission output speed, wheel speeds, engine speeds, clutch speed), the vehicle speed, the rpm or speed changes, the topography or the vehicle mass in conjunction with the topography; and **in that** the efficiency of the vehicle's cooling system is determined on the basis of the temperature within the cooling system, the temperature change as a function of time, the engine rpm, the pressure within the cooling circuit, the gear position, the clutch condition or the speed of the water pump.

3. Method according to claim 2, **characterized in that** the present brake action of the retarder, the present driving condition and the efficiency of the vehicle's cooling system are considered by means of a logic operation or a set of fuzzy logic rules, in order to detect the necessity of an engine-brake request and to trigger engine braking.

4. Method according to one of the claims 1 through 3, **characterized in that** the driver is acoustically, optically or haptically informed of the engine-brake request.

## Revendications

1. Méthode de requête d'actionnement de systèmes d'assistance à la puissance de freinage d'un véhicule selon laquelle lors du début du freinage à l'aide d'un ralentisseur sont enclenchés préventivement ou un thermostat à régulation électrique ou une pompe à eau électrique pour optimiser l'utilisation du système de refroidissement du véhicule, **caractérisée en ce qu'**une requête d'actionnement du frein moteur est générée s'il devrait être nécessaire en raison de la puissance de freinage du ralentisseur actuelle et, pour la détermination de la nécessité d'émettre une requête d'actionnement du frein moteur, sont pris en considération l'effet de freinage du ralentisseur actuel et les conditions de conduite actuels ainsi que la performance du système de refroidissement du véhicule.

2. Méthode selon la revendication 1, **caractérisée en ce que** l'effet de freinage actuel est calculé à partir du couple et de la puissance de freinage actuels, à partir de la pression d'entrée ou de sortie du ralentisseur ou à partir du courant pilote, **en ce que** la situation de conduite actuelle est déterminée à partir des régimes actuels (par exemple régime de sortie de la boîte de vitesses, régimes de roues, régimes moteur, régime de l'embrayage), à partir de la vitesse du véhicule, des variations de régime et de vitesse, de la topographie, ou de la masse du véhicule en combinaison avec la topographie, et **en ce que** la performance du système de refroidissement du véhicule est déterminée à partir de la température dans le système de refroidissement, de la variation de la température en fonction du temps, du régime moteur, de la pression dans le circuit de refroidissement, du rapport engagé, de la condition de l'embrayage ou du régime de la pompe à eau.

3. Méthode selon la revendication 2, **caractérisée en ce que** l'effet de freinage du ralentisseur et la condition de conduite actuels et la performance du système de refroidissement du véhicule sont pris en considération par l'intermédiaire d'une liaison logique ou d'un mécanisme de réglage flou, afin de reconnaître la nécessité et d'émettre une requête d'actionnement du frein moteur.

4. Méthode selon l'une des revendications 1 à 3, **caractérisée en ce que** la requête d'actionnement du frein moteur est signalée au conducteur de façon acoustique, optique ou tactile.
